# EUROPEAN PATENT APPLICATION

(11) **EP 2 538 196 A2**
(43) Date of publication of application: **26.12.2012**
(21) Application number: 12380033.6
(22) Date of filing: 21.06.2012
(51) Int. Cl.: G01N 3/56

(54) **Medium for testing products applicable on roads**

(30) Priority: 21.06.2011 ES 201130674
(71) Applicant: Sovitec Iberica, S.A.U., 08755 Castellbisbal (ES)
(72) Inventor: Calavia Redondo, David, 08755 Castellbisbal (ES); Dujardin, Stephan, 08755 Castellbisbal (ES)
(74) Representative: Espiell Volart, Eduardo Maria

(57) **Abstract**

It comprises a flattened piece of epoxy or acrylic wherein differentiated sections (2a, ..., 2d) with different textures and/or roughnesses that reproduce the surface characteristics of different types of pavements or asphalts used on roads figure on at least one of its surfaces, each one of said differentiated sections (2a, ... , 2d) making up an area for the application of different products (3a, 3b) to be tested. At least one of the differentiated sections (2a, ..., 2d) features reliefs which reproduce the cat's eyes used on roads.

## Description

### OBJECT OF THE INVENTION

The present invention relates to a medium for testing products applicable on roads, said products being of the type of those used to form road markings, rumble strips and other surface applications which, once applied, are exposed to road traffic.

### SCOPE OF THE INVENTION

The medium of this invention is applicable in the conduction of abrasion tests of products applicable on roads.

### BACKGROUND OF THE INVENTION

Paint, thermoplastics and other products intended to be applied on roads to make up road markings, various types of signalling or surface finishing, are generally made up of different components and proportions, which determines that the mechanical resistance characteristics of these products vary according to the mixture of components used in the preparation thereof.

The operating life of these products, once applied on roads, depends, on the one hand, on the resistance of the product and, on the other, on the physical characteristics of the pavement whereon they are applied in each case. To find out the possible results that these products will provide upon being exposed to road traffic and to make a suitable choice of the product to use in each case, they are submitted to tests in abrasion simulators prior to their application on roads.

These tests are performed using a medium whereon a layer of the product to be tested is applied, the abrasion simulator allowing for the placement of a limited amount of mediums.

Each medium comprises a piece of generally flat configuration for the application of a layer of the product to be tested. This medium is placed in the abrasion simulator, which performs a series of cycles where wheels pass over the product applied on the medium, simulating in a short time period intense and prolonged traffic, equivalent to years of being exposed to road traffic on a road. Once the test has been conducted, the performance of the product in question can be assessed and it can be determined whether the product is suitable for a specific application.

These tests are very expensive and, therefore, they cannot be performed for all of the combinations of products and types of pavements, so the manufacturers have to work with those that are known, gathered in a small number of tests and with approximate estimations based on experience.

The main technical problem considered is how to reduce the costs of performing said tests and achieve a multiparameter result on the performance of different products on different types of asphalts or pavements.

The applicant of the present invention does not know of the existence of references which resolve the problem set forth in a satisfactory manner.

### DESCRIPTION OF THE INVENTION

The medium for testing products applicable on roads object of the present invention features special technical features intended to provide, in a single test and for each medium used, a plurality of parameters relating to the abrasion performance of different products on different road pavements or asphalts.

The medium is of the type which comprises a piece of generally flattened configuration for the application of the product to be tested in an abrasion simulator.

According to the invention, the piece which makes up the medium comprises, on at least one of the surfaces thereof, differentiated sections with different textures and/or roughnesses, which reproduce the surface characteristics of different types of pavements or asphalts used on roads. Each one of said differentiated sections makes up an area for the application of different products to be tested, which permits multiparameter results to be obtained from a single test that relate to the performance of the different products on pavements or asphalts of different characteristics.

The medium of the invention allows for a significant reduction of the costs spent on tests for two different reasons: first of all, the roughnesses of conventional pavement is limited by regulations within boundaries, and it can be effectively reduced to approximately four or five grades of pavements with thinner or thicker corresponding roughnesses and, second of all, the medium of the invention permits one to obtain performance profiles of different products on different pavements from a single test, which significantly reduces the cost / result ratio.

The roughness of each section of the piece corresponds to the roughness of a pavement type, covering the main roughnesses used in paving or asphalting of roads. These sections approximately and reliably reproduce the grade corresponding to different types of pavements or asphalts, spanning the entire range from completely smooth ground with gravel of a certain thickness, or ground with projections, similar to those used in the so-called "cat's eyes" use to demarcate lanes in the road.

In turn, the differentiated areas of the piece which makes up the medium make it possible to apply and test products with different compositions, materials and proportions.

Thus, the performance of different products on different pavements is observed simultaneously.

A single medium allows one to obtain a considerable amount of evaluative parameters which make it possible for the manufacturer to obtain complete and accurate knowledge of the product they manufacture, as well as its abrasion performance by the action of road traffic on different roads or pavements. Furthermore, it ensures that the different parameters obtained are homogenous, since the testing conditions are the same for all of the products applied to the differentiated sections of the piece of medium.

In one embodiment of the invention, the piece in question is made of epoxy or acrylic material, which makes behaviour approximate to conventional asphalt or pavement in the test possible. Additionally, these mediums, made, for example, by means of molding techniques, are completely identical to each other, so that the results of the tests obtained on two mediums come from a single base, and do not depend on the capability of the performance of a conventional medium made for the same purpose.

As mentioned above, one of the differentiated sections of the piece features reliefs corresponding to the reliefs of the cat's eyes used on roads. Therefore, the resistance of the different products on these cat's eyes can be tested, thus evaluating their abrasion performance.

### DESCRIPTION OF THE FIGURES

To complement the description that is being made and with the object of assisting in a better understanding of the characteristics of the invention, accompanying the present specification is a set of drawings wherein, by way of illustration and not restrictively, the following has been represented:
- Fig. 1: shows a perspective view of the medium for testing products applicable on roads according to the invention;
- Fig. 2: show a perspective view of the medium, once the products to be tested on the differentiated sections defined on the surface of the plate which makes up the medium have been applied.

### PREFERRED EMBODIMENT OF THE INVENTION

As can be observed in the referenced figures, the medium of this invention comprises a flattened piece (1) with a rectangular bottom, made by molding, of epoxy resin, and which features differentiated sections (2a, ..., 2d) on its surface, with different textures and/or roughnesses, which reproduce the surface characteristics of different types of pavements or asphalts used on roads.

The roughnesses of the differentiated sections (2a, ..., 2d) are configured with the depth and grade of several types of road asphalts or pavements.

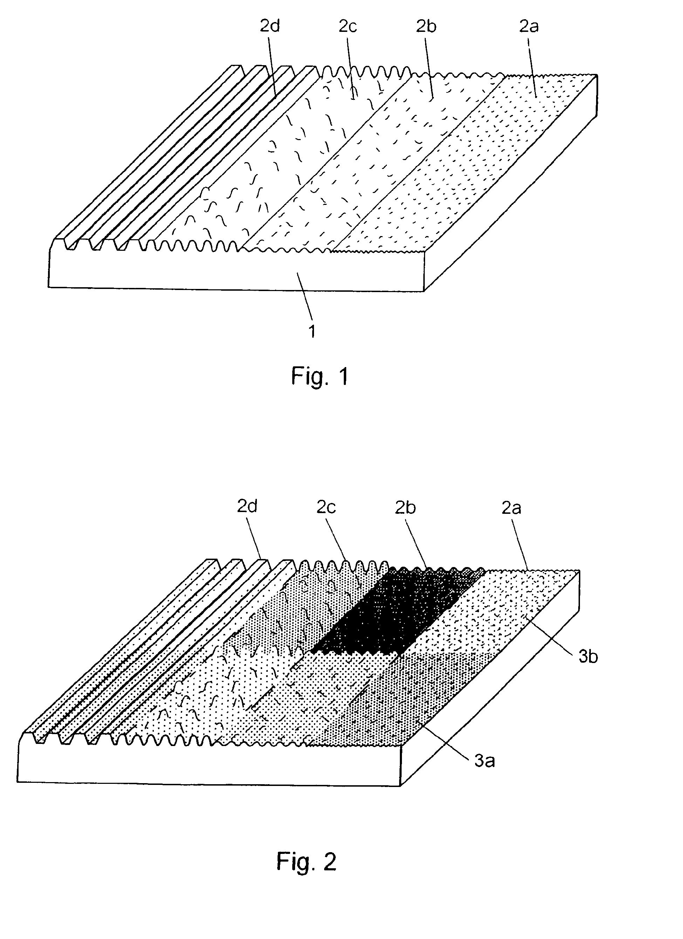

As shown in figure 2, each one of the differentiated sections (2a, ..., 2d) makes up an area for the application of different products (3a, 3b) to be tested, so that once the medium is submitted to an abrasion test, said medium provides multiparameter results relating to the performance of each one of the products on different types of asphalts or pavements.

The nature of the invention having been sufficiently described, as well as a preferred example of embodiment thereof, it should be mentioned for the appropriate purposes that the materials, shape, size and arrangement of the elements described can be modified, as long as it does not result in an alteration of the essential characteristics of the invention, which are claimed below.

## Claims

1. Medium for testing products applicable to roads, which comprises a piece (1) with a generally flattened configuration for the application of the product to be tested in an abrasion simulator, **characterized in that** said piece (1) comprises, on at least one of the surfaces thereof, differentiated sections (2a, ..., 2d) with different textures and/or roughnesses, which reproduce the surface characteristics of different types of pavements or asphalts used on roads, each one of said differentiated sections (2a, ..., 2d) making up an area for the application of different products (3a, 3b) to be tested.

2. Medium, according to claim 1, **characterized in that** the piece (1) is made of an epoxy or acrylic material.

3. Medium, according to either of the preceding claims, **characterized in that** at least one of the differentiated sections (2a, ..., 2d) features reliefs which reproduce the cat's eyes used on roads.
